(19) Europäisches Patentamt
European Patent Office
Office européen des brevets

(11) **EP 2 337 621 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **09782292.8**

(22) Anmeldetag: **27.08.2009**

(51) Int Cl.:
*B01J 20/06* ^(2006.01)      *B01J 20/10* ^(2006.01)
*B01J 20/32* ^(2006.01)      *B01J 20/34* ^(2006.01)
*H01M 8/0662* ^(2016.01)     *B01D 53/02* ^(2006.01)
*C10L 3/10* ^(2006.01)

(86) Internationale Anmeldenummer:
**PCT/EP2009/061086**

(87) Internationale Veröffentlichungsnummer:
**WO 2010/023249 (04.03.2010 Gazette 2010/09)**

(54) **ADSORBERMATERIAL UND VERFAHREN ZUR ENTSCHWEFELUNG VON KOHLENWASSERSTOFFHALTIGEN GASEN**

ADSORBER MATERIAL AND METHOD FOR DESULFURIZATION OF HYDROCARBON GASES

MATÉRIAU ADSORBANT ET PROCÉDÉ POUR DÉSULFURER DES GAZ RENFERMANT DES HYDROCARBURES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.09.2008 EP 08163363**
**29.12.2008 EP 08173009**

(43) Veröffentlichungstag der Anmeldung:
**29.06.2011 Patentblatt 2011/26**

(73) Patentinhaber: **BASF SE**
**67056 Ludwigshafen am Rhein (DE)**

(72) Erfinder:
• **SCHÄFER, Alexander**
**68161 Mannheim (DE)**
• **STEINER, Jochen**
**64625 Bensheim (DE)**
• **SCHWAB, Ekkehard**
**67434 Neustadt (DE)**
• **WENTINK, Annebart Engbert**
**68161 Mannheim (DE)**
• **BOOS, Helmut**
**67483 Edesheim (DE)**
• **AMRHEIN, Patrick**
**Princeton**
**NJ 08540 (US)**

(74) Vertreter: **BASF IP Association**
**BASF SE**
**ZRX-C6**
**67056 Ludwigshafen (DE)**

(56) Entgegenhaltungen:
**EP-A- 1 245 268        EP-A- 1 468 857**
**WO-A-2004/069367       DE-A1- 4 213 642**
**GB-A- 203 354          US-A- 4 251 495**
**US-A- 4 419 273        US-A1- 2007 093 385**

**Beschreibung**

Die Erfindung betrifft ein Adsorbermaterial sowie Verfahren zur Entschwefelung von kohlenwasserstoffhaltigen Gasen, insbesondere für die Verwendung in Brennstoffzellensystemen.

Kohlenwasserstoffhaltige Gase, wie z.B. Erdgas oder Flüssiggas, enthalten neben den normalerweise natürlich vorkommenden Schwefelverbindungen auch Schwefelverbindungen, die diesen Gasen aus Sicherheitsgründen zugesetzt werden.

Großtechnisch wird Erdgas vorwiegend unter Addition von Wasserstoff katalytisch hydrierend entschwefelt. Diese Entschwefelungsmethode ist jedoch für Klein- und Kleinstanwendungen, vor allem für Brennstoffzellen im häuslichen Bereich, nicht sinnvoll anzuwenden, so dass hier hauptsächlich auf eine adsorptive Methode zur Reinigung des Gasstromes zurückgegriffen wird.

Der für den Betrieb in Brennstoffzellen notwendige Wasserstoff wird meist durch die Reformierung von Erdgas gewonnen. Erdgas besitzt, vor allem in hoch industrialisierten Ländern, den Vorteil der großflächigen Verfügbarkeit, da ein engmaschiges Versorgungsnetz existiert. Zudem besitzt Erdgas ein für die Wasserstofferzeugung günstig hohes Wasserstoff / Kohlenstoffverhältnis.

Der Begriff "Erdgas" umschreibt eine Vielzahl möglicher Gaszusammensetzungen, die in Abhängigkeit vom Fundort stark streuen können. Erdgas kann fast ausschließlich aus Methan ($CH_4$) bestehen, kann aber auch beträchtliche Mengen an höheren Kohlenwasserstoffen enthalten. Unter dem Begriff "höhere Kohlenwasserstoffe" werden dabei alle Kohlenwasserstoffe ab Ethan ($C_2H_6$) verstanden, unabhängig davon, ob es sich um linear gesättigte oder ungesättigte, zyklische oder aromatische Kohlenwasserstoffe handelt. Typischerweise nehmen die Anteile an höheren Kohlenwasserstoffen im Erdgas mit höherem Molekulargewicht und höherem Dampfdruck ab. So findet man Ethan und Propan meist im niedrigen Prozentbereich, während von Kohlenwasserstoffen mit mehr als zehn Kohlenstoffatomen meist nur wenige ppm im Erdgas enthalten sind. Unter den höheren Kohlenwasserstoffen befinden sich auch zyklische Verbindungen, wie z.B. das krebserregende Benzol, Toluol und Xylole. Jede dieser Verbindungen kann in Konzentrationen von > 100 ppm auftreten.

Zusätzlich zu den höheren Kohlenwasserstoffen kommen im Erdgas weitere Gasbegleitstoffe und Verunreinigungen, die Heteroatome enthalten können, vor.

In diesem Zusammenhang sind insbesondere Schwefelverbindungen natürlichen Ursprungs zu nennen, die in geringen Konzentrationen vorkommen können. Beispiele hierfür sind Schwefelwasserstoff ($H_2S$), Kohlenstoffoxidsulfid (COS), Kohlenstoffdisulfid ($CS_2$) und leichte Organoschwefelverbindungen wie zum Beispiel MeSH. Je nach Herkunft des Gases kann vor allem das schwierig zu entfernende COS in erhöhter Konzentration vorkommen, was eine aufwändige Reinigungsstufe notwendig macht.

Neben den natürlicher Weise im Erdgas enthaltenden Schwefelverbindungen wie vor allem $H_2S$ und COS werden dem Erdgas aus Sicherheitsgründen weitere Schwefelverbindungen als sogenannte Odorierstoffe beigemischt. Methan bzw. Erdgas an sich sind geruchslose Gase, die nicht toxisch sind, jedoch in Verbindung mit Luft zu zündfähigen Gemischen führen können. Um einen Austritt von Erdgas sofort detektieren zu können, wird Erdgas mit intensiv riechenden Stoffen in geringer Konzentration versetzt, die als so genannte Odorierungsmittel den für Erdgas charakteristischen Geruch verursachen. Die Odorierung von Erdgas ist in den meisten Ländern - zusammen mit den einzusetzenden Odorierungsmitteln - gesetzlich vorgeschrieben. In einigen Ländern, wie z. B. den Vereinigten Staaten von Amerika, werden Mercaptane (R-S-H, R = Alkylrest), wie tert-Butylmercaptan oder Ethylmercaptan, als Odorierungsmittel eingesetzt, während in den Mitgliedsstaaten der Europäischen Union meist zyklische Schwefelverbindungen, wie Tetrahydrothiophen (THT), verwendet werden. Aufgrund möglicherweise ablaufender chemischer Reaktion können aus diesen Mercaptanen (R-S-H) Sulfide (R-S-R) und/ oder Disulfide (R-S-S-R) gebildet werden, die ebenfalls entfernt werden müssen. Zusammen mit den natürlich vorkommenden Schwefelverbindungen ergibt sich somit eine Vielzahl verschiedener Schwefelverbindungen im Erdgas. Die unterschiedlichen Regelwerke für die Zusammensetzung von Erdgas erlauben meist bis zu 100 ppm Schwefel im Erdgas. Ähnlich ist die Situation bei Flüssiggas (LPG) als Einsatzstoff. Flüssiggas, das als Hauptbestandteile Propan und Butan enthält, muss ebenso wie Erdgas mit schwefelhaltigen Molekülen als Geruchsmarker versetzt werden.

Die Schwefelkomponenten im Erdgas oder im LPG können zu einer starken und irreversiblen Vergiftung der Katalysatoren in der Brennstoffzelle oder im Reformer führen. Aus diesem Grunde müssen die Gase, welche der Brennstoffzelle zugeführt werden, von allen schwefelhaltigen Komponenten gereinigt werden. Brennstoffzellen enthalten aus diesem Grunde immer eine Entschwefelungseinheit für das eingesetzte Erdgas oder LPG. Sollte die Brennstoffzelle mit flüssigen Kohlenwasserstoffen betrieben werden, wie z.B. Heizöl, so ist ebenfalls eine Entschwefelung notwendig.

Zu bevorzugen ist eine Verfahrensführung, bei der das kohlenwasserstoffhaltige Gas in geradem Durchgang bei Raumtemperatur durch einen Adsorber geleitet wird, der möglichst alle Schwefelkomponenten vollständig entfernt. Der Adsorber sollte bevorzugt bei Betriebstemperatur und Betriebsdruck der Brennstoffzelle arbeiten. Aus Sicherheitsgründen befindet sich der Adsorberbehälter in der Regel in dem Gehäuse der Brennstoffzelle. Dort können Temperaturen von bis zu 70 °C herrschen. Weiterhin liegt der Druck im Gasleitungsnetz beim Endverbraucher in der Regel um bis zu mehrere hundert mbar über dem Umgebungsdruck.

Da der Adsorber zum Betrieb von Erdgasen unterschiedlicher Zusammensetzung geeignet sein soll, ist es zudem wichtig, dass lediglich die schwefelhaltigen Komponenten aus dem Erdgas adsorbiert werden und die Co-Adsorption höherer Kohlenwasserstoffe auf ein vernachlässigbares Maß unterdrückt wird.

Die Co-Adsorption höherer Kohlenwasserstoffe, insbesondere von Benzol aus Erdgas, kann zudem zur Folge haben, dass gesetzliche Grenzwerte für Benzolgehalte im Adsorber überschritten werden und die Adsorbereinheit somit kennzeichnungspflichtig wird. Derartige, mit Benzol gesättigte Adsorber verursachen zudem, z.B. beim Wechsel des Adsorbermediums oder beim Transport des Adsorbers zum Recycling, erheblichen Mehraufwand und Kosten.

Nach dem heutigen Stand der Technik gelingt eine Entschwefelung von Erdgas nur durch eine zweistufige Anordnung von unterschiedlichen Adsorbentien, die speziell für die Entfernung der natürlichen Schwefelkomponenten und der Odorierstoffe verwendet werden.

Aus US-A 2002/0159939 ist ein zweistufiges Katalysatorbett, bestehend aus einem X-Zeolithen zur Entfernung von Odorierungsmitteln und daran anschließend einem nickelbasierten Katalysator zur Entfernung von schwefelhaltigen Komponenten aus Erdgas für den Betrieb in Brennstoffzellen bekannt. Nachteilig an diesem Verfahren ist, dass COS nicht direkt, sondern erst nach vorheriger Hydrolyse zu $H_2S$ entfernt werden kann. Weiterhin werden durch den Zeolithen Benzol und höhere Kohlenwasserstoffe aufgenommen. Zusätzlich ist Nickel als krebserzeugend bekannt.

In US-A-5,763,350 werden zur Entfernung von natürlich vorkommenden Schwefelverbindungen anorganische Träger, bevorzugt Aluminiumoxid, imprägniert mit einer Mischung der Oxide von Elementen der Gruppen IB, IIB, VIB und VIIIB des Periodensystems der Elemente, bevorzugt einer Mischung von Cu-, Fe, Mo- und Zn-Oxiden, vorgeschlagen. Auch hier werden die Schwefelverbindungen zunächst zu $H_2S$ hydrolysiert. Gemäß DE-A 3 525 871 werden in Gasgemischen enthaltene natürlich vorkommende Organoschwefelverbindungen, wie COS und $CS_2$, mit Schwefel- bzw. Stickoxiden quantitativ in Gegenwart von Katalysatoren beseitigt, wobei als Katalysatoren Verbindungen des Sc, Y, der Lanthaniden, Actiniden oder deren Gemische auf z. B Aluminiumoxid eingesetzt werden. Die Katalysatoren werden bei ihrer Herstellung bei 100 bis 1000 °C getrocknet und gesintert.

Nach US-A 6,024,933 erfolgt eine Direktoxidation der Schwefelkomponenten zu elementarem Schwefel oder zu Sulfaten an einem geträgerten Kupferkatalysator, der auf Aluminiumoxid als Träger mindestens ein weiteres katalytisch aktives Element, ausgewählt aus der Gruppe Fe, Mo, Ti, Ni, Co, Sn, Ge, Ga, Ru, Sb, Nb, Mn, V, Mg, Ca und Cr, aufweist.

WO 2007/021084 beschreibt einen Kupfer-Zink-Aluminium-Verbundstoff als Desulfurierungsmittel, der bei 200 bis 500 °C calciniert wird.

Aus EP-A 1 121 977 ist die adsorptive Entfernung von schwefelhaltigen Odorierstoffen wie Sulfiden, Mercaptanen und Thiophenen, aus Erdgas mit Hilfe silberdotierter Zeolithe bei Raumtemperatur bekannt.

Ein - neben dem hohen Silbergehalt - weiterer, deutlicher Nachteil der zeolithbasierten Systeme ist die Tatsache, dass Zeolithe in ihrem Porensystem bereitwillig alle im Gasstrom vorkommenden, höheren Kohlenwasserstoffe adsorbieren. Insbesondere zyklische Kohlenwasserstoffe, wie z. B. Benzol, werden vollständig adsorbiert und können im Zeolithen bis in den Bereich von einigen Gew.-% angereichert werden.

Die Verfahren des Standes der Technik lösen das Problem der unerwünschten Co-Adsorption der im Gasstrom vorkommenden insbesondere zyklischen Kohlenwasserstoffe, wie z. B. Benzol, im Porensystem des Katalysators nicht. Ein weiterer Nachteil besteht darin, dass die Adsorption höherer Kohlenwasserstoffe unter Umständen zu pyrophoren Adsorbentien führt, so dass diese bei Vorhandensein einer Zündquelle beim Ausbau des gebrauchten Katalysators Feuer fangen können. Ein weiterer Nachteil besteht darin, dass COS in der Regel nur mit Hilfe einer vorgeschalteten Hydrolysestufe entfernt werden kann.

Der vorliegenden Erfindung liegt deshalb die Aufgabe zu Grunde, ein Adsorptionsmittel bereitzustellen, das eine hohe Aufnahmekapazität sowohl für natürliche Schwefelverbindungen wie COS und $H_2S$ als auch für organische Sulfide (Mercaptane wie Etyhlmercaptan), Disulfide und zyklische Odorierungsmittel, insbesondere Tetrahydrothiophen (THT) aufweist und gleichzeitig eine sehr geringe Co-Adsorption von Benzol aufweist.

Die Aufgabe wird gelöst durch ein Verfahren gemäss Anspruch 1.

Das erfindungsgemäß eingesetzte Adsorbermaterial enthält im Allgemeinen 30 bis 70 Gew.-%, bevorzugt 40 bis 60 Gew.-%, besonders bevorzugt 46 bis 54 Gew.-% und insbesondere 48 bis 52 Gew.-% Kupferoxid. Dieses liegt im Wesentlichen, vorzugsweise vollständig, als Kupfer(II)oxid CuO vor. Daneben kann das erfindungsgemäß eingesetzte Adsorbermaterial als Nebenbestandteile bis zu 5 Gew.-% eines oder mehrere weitere Oxide von Metallen und Übergangsmetallen der Gruppen 2 und 4 bis 12 des Periodensystems der Elemente enthalten. Im Allgemeinen beträgt der Gehalt an Nebenbestandteilen maximal 2 Gew.-%. Beispiele für Nebenbestandteile sind Oxide von Chrom ($Cr_2O_3$), Barium und Zink. Im Allgemeinen beträgt der gesamte Metalloxidgehalt also 30 bis 75 Gew.-%, bevorzugt 40 bis 62 Gew.-%, der Summe aus Magnesiumsilikat-Träger und Metalloxiden.

Im Allgemeinen beträgt der $SiO_2$-Gehalt des Magnesiumsilikats von 32 bis 38 Gew.-% und der MgO-Gehalt von 12 bis 18 Gew.-%, stöchiometrisches Magnesiumsilikat weist die Verhältnisformel $Mg_2SiO_4$ auf.

Das erfindungsgemäß eingesetzte Adsorbermaterial kann wie nachfolgend beschrieben hergestellt werden.

Dabei wird eine alkalische wässrige Natriumsilikatlösung mit der wässrigen Lösung eines Magnesiumsalzes, insbesondere Magnesiumnitrat, vereinigt. Zu der erhaltenen Magnesiumsilikatlösung werden die Lösung eines Kupfersalzes, vorzugsweise Kupfernitrat, welche weitere Metallsalze enthalten kann, und Sodalösung gleichzeitig hinzu gegeben. Gegebenenfalls können die Metallsalzlösungen der weiteren Metalle auch separat (aber gleichzeitig mit Kupfersalz- und Sodalösung) zugegeben werden. Der Niederschlag wird abfiltriert, getrocknet und gegebenenfalls calciniert.

Insbesondere kann das Adsorbermaterial wie folgt hergestellt werden: Eine stark alkalische Natriumwasserglaslösung (pH-Wert ca. 13) wird zusammen mit einer Magnesiumnitratlösung in einem Fällgefäß vereint, homogenisiert und auf max. 40 °C erwärmt. Die eingesetzten Stoffmengen (in kg) an $SiO_2$, $Na_2O$ und MgO verhalten sich wie 2,0 : 1,25 : 1,0. Die in dieser Vorfällung hergestellte Magnesiumsilikatlösung wird anschließend auf max. 70 °C erwärmt.

Separat wird eine Metallsalzlösung angesetzt. Die Menge und Zusammensetzung der Metallsalzlösung richtet sich nach der gewünschten Endzusammensetzung des auf dem Magnesiumsilikat geträgerten oxidischen Metalls. In der Regel beträgt der Metalloxidanteil zwischen 30 und 70 Gew.-% (bezogen auf die Gesamtmasse) und kann sich aus Metallen der Gruppe 2, und/oder einem oder mehrere Übergangsmetalle der Gruppe 4 bis 12 zusammensetzen. Vorgelegt werden die Metalle in Form leichtlöslicher Salze in angesäuerter, wässriger Lösung.

Die Metallsalzlösung wird ebenfalls auf max. 70 °C erwärmt und zu der Magnesiumsilikatlösung gegeben. Durch Zugabe einer Sodalösung wird der pH-Wert der Fällung konstant bei ca. 7 gehalten. Je nach Anspruch an die Kristallitgröße des Fällgutes kann eine Alterung der Fällung durchgeführt werden, d.h. die Verweilzeit bei erhöhter Temperatur im Fällgefäß wird verlängert.

Nach beendeter Fällung bzw. Fällung und Alterung wird die Suspension in eine Filterpresse überführt, filtriert und mit VE Wasser auf einen Leitfähigkeitswert < 100 $\mu$S/cm gewaschen. Die Filtermasse wird anschließend getrocknet und in einem Drehrohr auf den gewünschten Glühverlust calciniert. Das so erhaltene Pulver kann in Folgeschritten zu Tabletten, Extrudaten oder sonstigen gängigen Formkörpern weiterverarbeitet werden.

Bei Bedarf kann zur Einstellung der Porenradienverteilung und der Oberfläche eine Nachcalcinierung erfolgen, die bevorzugt zwischen 1 bis 3 h bei 400 bis 700 °C durchgeführt wird. Ohne Nachcalcinierung weist das Adsorbermaterial einen höheren Anteil von Poren mit einem Radius von kleiner 6 nm auf. Im Allgemeinen beträgt das Porenvolumen in diesem Bereich > 10% des Gesamtporenvolumens, bestimmt mit Hilfe der Quecksilber-Porosimetrie. Durch Nachcalcinierung wird der Anteil von Poren mit Porenradien von kleiner als 6 nm deutlich reduziert. Somit beträgt der Anteil des Porenvolumens nach erfolgter Nachcalcinierung in dem angegebenen Temperaturbereich im Allgemeinen < 5 % des Gesamtporenvolumens. Dadurch wird die Tendenz der Materialien zur Co-Adsorption von Kohlenwasserstoffen deutlich reduziert.

Das erfindungsgemäß eingesetzte Adsorbermaterial adsorbiert schwefelhaltige Komponenten aus kohlenwasserstoffhaltigem Gas, nämlich Erdgas, wobei die Co-Adsorption höherer Kohlenwasserstoffe auf ein vernachlässigbares Maß reduziert ist. Das Adsorbermaterial ist durch hohe Adsorptionskapazitäten für schwefelhaltige Verbindungen und damit ausreichend lange Standzeiten gekennzeichnet, wodurch das häufige Austauschen des Adsorbermaterials vermieden werden kann. Das Adsorbermaterial ist zur Entschwefelung von kohlenwasserstoffhaltigen Gasgemischen unterschiedlicher Zusammensetzung geeignet.

Das zu reinigende kohlenwasserstoffhaltige Gasgemisch ist Erdgas. Dieses enthält ganz überwiegend Methan, kann aber bis zu 10 Vol-% höhere Kohlenwasserstoffe enthalten. Erfindungsgemäss gereinigt wird auch LPG (liquid petroleum gas). Dieses enthält im Allgemeinen mindestens 90 Vol-% Propan und Butan.

Im Allgemeinen enthält das zu reinigende kohlenwasserstoffhaltige Gasgemisch insgesamt 1 bis 500 ppm, vorzugsweise 5 bis 250 ppm einer oder mehrerer schwefelhaltiger Komponenten. Häufig liegen schwefelhaltige Komponenten in folgenden Mengen vor:

| | |
|---|---|
| $H_2S$ | 0,5 bis 50 ppm; |
| COS | 0,5 bis 100 ppm; |
| Mercaptane | 0 bis 100 ppm, vorzugsweise 1 bis 100 ppm; |
| Sulfide | 0 bis 100 ppm, vorzugsweise 1 bis 100 ppm; |
| Tetrahydrothiophen | 0 bis 20 ppm, vorzugsweise 0,5 bis 20 ppm; |

Ein übliches in den zu reinigenden kohlenwasserstoffhaltigen Gasen anzutreffendes Mercaptan ist Ethylmercaptan, ein übliches Sulfid ist Dimethylsulfid.

Das durch Schwefelverbindungen verunreinigte, kohlenwasserstoffhaltige Gas kann bei einer Temperatur von (-50) bis 150 °C, bevorzugt (-20) bis 80 °C, besonders bevorzugt 0 bis 80 °C, insbesondere 15 bis 60 °C, und einem Druck von 0,1 bis 10 bar, bevorzugt 0,5 bis 4,5 bar, besonders bevorzugt 0,8 bis 2,0 bar über das erfindungsgemäß eingesetzte Adsorbermaterial geleitet werden.

Vorteilhafterweise wird das kohlenwasserstoffhaltige Gas in geradem Durchgang durch dieses Adsorbermaterial geleitet. Das Verfahren wird besonders bevorzugt bei Raumtemperatur und bei Normaldruck betrieben.

Die Aufnahmekapazität des Adsorbermaterials für eine Schwefelkomponente errechnet sich aus der mittleren Konzentration des Prüfgases an dieser Schwefelkomponente und der Zeit, nach der die erste Schwefel enthaltende Verbindung im online-GC detektiert wird. Ein allgemein gültige Formel lautet: Kapazität [g/l] = (Konzentration [mg/m$^3$] x Gasvolumen [m$^3$/h] x Laufzeit [h])/(Volumen an Katalysator [m$^3$] x 1.000.000). Als Laufzeit versteht man die Zeit, bis zu der keine Schwefelverbindung am GC detektiert wird. Das Gasvolumen entspricht dem Prüfgasstrom unter Normbedingungen.

Da insbesondere die THT-Kapazität des Adsorbermaterials aufgrund der physisorptiven Wechselwirkung von der Konzentration abhängt, werden zur Testung nur THT-Konzentrationen verwendet, die einer realistischen Odorierung der Gasnetze entsprechen. Als Prüfgas wird daher ein Gasstrom mit im Mittel 3 Vol.-ppm THT und 60 Vol.-ppm Benzol eingesetzt.

Mit dem erfindungsgemäßen Entschwefelungsverfahren werden die Schwefelkomponenten vollständig entfernt. Vollständig im Sinne dieser Erfindung bedeutet eine Entfernung bis unterhalb der derzeit möglichen Nachweisgrenze bei Messung mittels GC, die bei 0,04 ppm liegt. Damit eignen sich das Verfahren sowie der erfindungsgemäße Katalysator hervorragend insbesondere für den Einsatz in Brennstoffzellenanwendungen.

Aus dem Gasstrom adsorbiert werden sowohl $H_2S$, COS und $CS_2$ als auch Mercaptane, Sulfide, Disulfide und cyclische Schwefelverbindungen wie THT.

Im Zusammenhang mit einem Brennstoffzellensystem kann das erfindungsgemäße Verfahren der Reformierungsstufe vorgeschaltet werden. Dabei kann das nach der erfindungsgemäßen Reinigung zur Gewinnung von Wasserstoff verwendete kohlenwasserstoffhaltige Gas direkt in den Reformer bzw. direkt in die Brennstoffzelle eingespeist werden. Dabei eignet sich das erfindungsgemäße Verfahren für alle bekannten Typen von Brennstoffzellen wie Niedertemperatur- und Hochtemperatur-PEM-Brennstoffzellen, phosphorsauren Brennstoffzellen (PAFC), MCFC-Brennstoffzellen (Schmelzcarbonat) und Hochtemperaturbrennstoffzellen (SOFC).

Bei der Anwendung des erfindungsgemäßen Verfahrens im Zusammenhang mit einer Brennstoffzelle kann es vorteilhaft sein, den verbrauchten Katalysator nicht direkt im System zu regenerieren, sondern auszutauschen und nach dem Ausbau gesondert zu regenerieren. Dies gilt insbesondere für Brennstoffzellen mit geringer Leistung.

Das erfindungsgemäße Verfahren eignet sich insbesondere für die Verwendung in stationären und mobilen Anwendungen. Bevorzugte Anwendungen im stationären Bereich sind beispielsweise Brennstoffzellensysteme für die simultane Erzeugung von Strom und Wärme, wie Blockheizkraftwerke (sogenannte CHP-Einheiten), bevorzugt bei der Hausenergieversorgung. Weiterhin eignet sich das System zur Reinigung von Gasströmen für die Entschwefelung von Erdgas für Gasmotoren. Für die Anwendung im instationären Bereich kann das Verfahren zur Reinigung von Kohlenwasserstoffen für Brennstoffzellen in Personenkraftwagen (PKW), Lastkraftwagen (LKW), Bussen oder Lokomotiven, bevorzugt PKW und LKW, besonders bevorzugt PKW, eingesetzt werden. Es ist dabei gleichgültig, ob die Brennstoffzellen lediglich zur Bordstromerzeugung oder für den Antrieb eingesetzt werden.

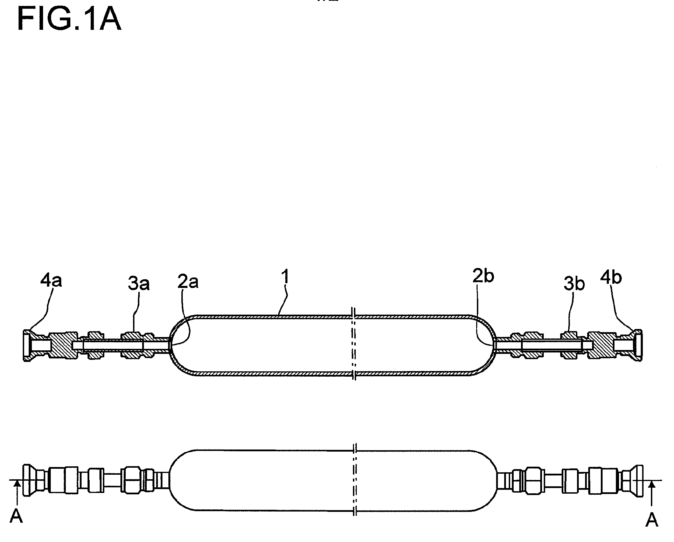

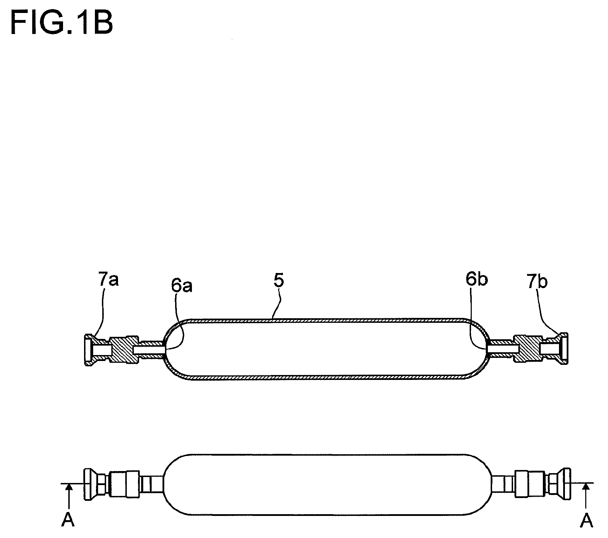

In einer Ausführungsform liegt das Adsorbermaterial in einer austauschbaren Entschwefelungskartusche vor. Die austauschbare Entschwefelungskartusche lässt sich einfach und flexibel in die zuvor genannten stationären und mobilen Anwendungen integrieren. Geeignete Kartuschen sind beispielsweise zylindrische Behälter mit Einschraubverschraubungen, in die sich gasdichte Schnellkupplungen verschrauben lassen. Die gasdichten Schnellkupplungen können auch direkt an den Behälter angesetzt sein. Ein geeignetes Kartuschendesign ist in den Figuren 1 a und 1 b wiedergegeben.

Figur 1a zeigt eine mögliche Ausführungsform einer auswechselbaren Kartusche umfassend einen Behälter 1, Filtergewebe 2a, 2b, Einschraubverschraubungen 3a, 3b und gasdichte Schnellkupplungen 4a, 4b.

Figur 1b zeigt eine weitere Ausführungsform einer auswechselbaren Kartusche umfassend einen Behälter 5, Filtergewebe 6a, 6b und gasdichte Schnellkupplungen 7a, 7b.

Durch den Einsatz von Schnellkupplungen kann die Entschwefelungskartusche problemlos am Ende der Standzeit, beispielsweise bei Erschöpfung der chemisorptiven und/oder physisorptiven Kapazität des eingesetzten Adsorbermaterials, ausgetauscht werden, ohne dass bauliche Veränderungen an der betreffenden Anwendung vorgenommen werden müssen. Die Kartusche lässt sich somit einfach durch eine neue Kartusche mit frischem oder regeneriertem Adsorbermaterial ersetzen. Auch ist das Befüllen der Kartusche mit Adsorbermaterial problemlos und schnell möglich.

Vorzugsweise wird das Verhältnis Länge zu Durchmesser der Kartusche bei gegebenem Kartuschenvolumen V, welches sich wiederum aus der Dichte des Adsorbermaterials, der spezifischen Kapazität des Adsorbermaterials sowie der gewünschten Gesamtkapazität (= insgesamt zu bindende Menge an schwefelhaltigen Komponenten) ergibt, so gewählt, dass der sich über die gesamte Länge L der Kartusche einstellende Druckverlust ΔP kleiner ist als der Leitungsdruck, mit dem das zu reinigende kohlenwasserstoffhaltige Gasgemisch beaufschlagt wird. Die maximal mögliche Länge L der Kartusche ist somit eine Funktion des spezifischen Druckverlustes des Adsorbermaterials und der gewünschten Gesamtadsorptionskapazität für ein gegebenes Adsorbermaterial. Aus dieser Länge L und dem erforderlichen Gesamtvolumen V ergibt sich der Durchmesser D der Kartusche.

Das bevorzugte Kartuschenlayout der auswechselbaren Entschwefelungskartusche lässt sich auch durch die nachstehende Formel beschreiben:

$$i = \Delta P^* \cdot \frac{V}{L \cdot D \cdot c}$$

mit

$\Delta P^*$ = spezifischer Druckverlust [in kPa/m]
$V$ = Kartuschenvolumen [l]
$L$ = Kartuschenlänge [m]
$D$ = Äquivalenzdurchmesser der Kartusche [m]
$c$ = gemittelte anteilige Kapazität.

Der Äquivalenzdurchmesser D ist hierbei der Durchmesser der kreisförmigen Querschnittsfläche, die der Kartuschenquerschnittsfläche entspricht. Die gemittelte anteilige Kapazität c ergibt sich aus:

$$c = x_1 \cdot c_1 + x_2 \cdot c_2 + ... + x_n \cdot c_n$$

mit $x_n = V_n/V$ und $c_n$ = Kapazität des Adsorbers $n$.

Das Verhältnis von $L/D$ liegt vorzugsweise zwischen 1,0 und 25. Der Wert des Parameters i liegt vorzugsweise zwischen 0 und 100.

Eine derartige Entschwefelungskartusche zeichnet sich dadurch aus, dass der aufgrund ihrer Abmessungen minimale Druckverlust eine effiziente Nutzung des Adsorbervolumens zulässt. Dies führt zu einer bestmöglichen Verwendung des eingesetzten Adsorbermaterials bei größtmöglicher Standzeit.

Selbstverständlich können die auswechselbaren Entschwefelungskartuschen mit jedem beliebigen geeigneten Adsorptionsmaterial betrieben werden. Beispielsweise können sie auch mit den in WO 2004/056949 beschriebenen Adsorbermaterialien, welche 1 bis 99,8 Gew.-%, insbesondere 5 bis 70 Gew.-% Kupfer, Silber, Zink, Molybdän, Eisen, Kobalt, Nickel oder deren Gemische und 0,2 bis 99 Gew.-%, insbesondere 30 bis 95 Gew.-% Oxide von Elementen der Gruppe IIB, IIIB, IVB, VIII, VIIIA und IVA des Periodensystems der Elemente, wie die Oxide von Magnesium, Calcium, Scandium, Yttrium, Lanthan, Titan, Zircon, Chrom, Wolfram, Bor, Aluminium, Gallium, Silicium, Germanium und Zinn, enthalten, betrieben werden. Ein weiteres gut geeignetes Adsorbermaterial enthält Silber und vorzugsweise zusätzlich Kupfer auf einem Trägermaterial, vorzugsweise Aluminiumoxid, insbesondere reines Gamma-Aluminiumoxid, wie in der nicht-vorveröffentlichten EP 07114114.7 beschrieben.

In einer weiteren bevorzugten Ausführungsform des erfindungsgemäßen Verfahrens wird das mit den schwefelhaltigen Verbindungen beladene Adsorbermaterial dadurch regeneriert, dass es mit einem heißen stickstoffhaltigen Gasstrom in Kontakt gebracht wird. Vorzugsweise enthält der Gasstrom mindestens 75 Vol.-% Stickstoff. Um die Regenerierung zu beschleunigen, kann zusätzlich das zu regenerierende Adsorbermaterial beheizt werden. In einer weiteren Ausführungsform der Erfindung wird das Adsorbermaterial beheizt und mit einem Gasstrom in Kontakt gebracht.

Das mit den schwefelhaltigen Verbindungen beladene Adsorbermaterial kann in der Kartusche regeneriert werden. Dazu wird die Kartusche mit dem heißen Regeneriergasstrom beaufschlagt und vorzugsweise zusätzlich von außen geheizt.

Eine Regenerierung des Adsorbermaterials in der Kartusche ist insbesondere dann vorteilhaft, wenn die Kapazität des Adsorbermaterials bezüglich der nur physisorptiv gebundenen Schwefelverbindungen (beispielsweise THT, Dimethylsulfid) erschöpft ist, das Adsorbermaterial bezüglich der chemisorptiv gebundenen Schwefelverbindungen (beispielsweise $H_2S$, Ethylmercaptan) aber noch aufnahmefähig ist. Dann ist es ökonomisch vorteilhaft, die nur physisorptiv gebundenen Schwefelverbindungen in der zuvor beschriebenen Weise von dem Adsorbermaterial zu desorbieren, und das so regenerierte Adsorbermaterial weiterzuverwenden, bis dessen Aufnahmekapazität bezüglich der chemisorptiv gebundenen Schwefelkomponenten erschöpft ist. Erst dann ist ein Ersatz des gebrauchten Adsorbermaterials durch frisches Adsorbermaterial erforderlich, da sich das Adsorbermaterial bezüglich der chemisorptiv (im Allgemeinen irreversibel) gebundenen Schwefelkomponenten nicht ohne weiteres regenerieren lässt.

In einer weiteren Variante des erfindungsgemäßen Verfahrens wird somit das Adsorbermaterial bezüglich der physisorptiv gebundenen Schwefelverbindungen mindestens einfach, vorzugsweise aber mehrfach in der Entschwefelungskartusche regeneriert und weiterverwendet, bis die Aufnahmekapazität des Materials für die chemisorptiv gebundenen Komponenten nahezu erreicht, erreicht oder überschritten ist. Vorzugsweise geschieht die Regeneration durch Überleiten eines Stickstoffstroms und bei Temperaturen von 150 bis 250 °C, wobei nur der Stickstoffstrom, nur das Adsorbermaterial (durch Beheizen der Kartusche von außen) oder sowohl Stickstoffstrom als auch Adsorbermaterial geheizt werden können. Die Regenerationszeit kann beispielsweise 3 bis 12 Stunden betragen. Das genannte Regenerationsverfahren bietet sich auch an, wenn in der Entschwefelungskartusche ein Gemisch aus mindestens zwei verschiedenen Adsorbermaterialien vorliegt, wobei das erste Adsorbermaterial (Adsorberklasse 1) Schwefelverbindungen überwiegend chemisorptiv bindet und das zweite Adsorbermaterial (Adsorberklasse 2) Schwefelverbindungen überwiegend physisorptiv bindet.

Materialien, die Schwefelverbindungen (beispielsweise $H_2S$) überwiegend chemisorptiv binden, sind beispielsweise solche, die Oxide der Metalle Cu, Zn, Fe, Ni, Mn, Pb, Mg, Ca und Na enthalten. Ein geeignetes Material der Adsorberklasse 1 enthält beispielsweise 40 Gew.-% CuO, 40 Gew.-% ZnO und 20 Gew.-% $Al_2O_3$. Neben $H_2S$ können die genannten Materialien auch COS, Mercaptane, Thioether, Disulfide und THT chemisorptiv binden.

Materialien, die Schwefelverbindungen überwiegend physisorptiv binden, sind beispielsweise solche, die eines oder mehrere der Metalle Ag, Cu, Mo, Mn oder Zn in oxidischer oder sulfidischer Form enthalten. Diese binden vor allem Disulfide, Thioether und THT.

Das vorstehend beschriebene Regenerierverfahren, bei dem das Adsorbermaterial bezüglich der physisorptiv gebundenen Schwefelverbindungen in der Kartusche mehrfach regeneriert wird, wird mit dem Adsorbermaterial enthaltend Kupferoxid auf Magnesiumsilicat als Trägermaterial durchgeführt. Dieses Adsorbermaterial zeichnet sich dadurch aus, dass es bestimmte Schwefelverbindungen physisorptiv und andere Schwefelverbindungen chemisorptiv bindet, wobei die Aufnahmekapazität bezüglich der chemisorptiv gebundenen Schwefelverbindungen größer ist als bezüglich der physisorptiv gebundenen Schwefelverbindungen.

Es ist auch möglich, eine Kartusche nur mit physisorptiven Materialien zu füllen und immer wieder zu regenerieren.

Die Erfindung wird anhand der nachfolgenden Ausführungsbeispiele näher erläutert.

**Beispiele**

Beispiel 1

Herstellung des Adsorbermaterials

Natriumwasserglaslösung (27%ig, 1,7 kg $SiO_2$) wird mit NaOH-Lösung (25%ig, 1,0 kg $Na_2O$) und 5 kg VE Wasser gemischt (Lösung1). In einer Vorlage werden 7 kg VE Wasser auf ca. 45 °C erwärmt. In diese temperierte Vorlage werden zeitgleich Lösung 1 und eine Mg-Nitrat Lösung (8%ig, 0,8 kg MgO) gegeben. Nach beendeter Zugabe wird für 30 min bei 55 °C nachgerührt. Zu dieser Fälllösung werden innerhalb mehrere Stunden bei 55 °C parallel zwei Lösungen aus Cu-Nitrat (20%ig, 2,4 kg CuO) und Soda-Lösung (20%ig, 5 kg $Na_2CO_3$) gegeben.

Der entstandene Feststoff wird filtriert, nitratfrei gewaschen und für 48 h bei 120 °C getrocknet, bis ein Glühverlust von ca. 20% bei 900 °C erreicht ist.

Die Trockenmasse wird bei 220 °C für 3 h getempert, anschließend mit ca. 4% Graphit gemischt und zu Formkörpern tablettiert (1.5x1.5 mm und 3x5 mm).

Physikalische Eigenschaften:

| | |
|---|---|
| CuO-Gehalt | 50 g/100 g |
| $SiO_2$-Gehalt | 35 g/100 g |
| MgO-Gehalt | 14 g/100 g |
| Rest | Kohlenstoff |
| Mittlere Seitendruckfestigkeit | 34 N |
| Oberfläche | 310 - 330 $m^2$/g |
| Litergewicht | 800 - 840 g/l |
| Porosität in Wasser | 0,45 - 0,50 ml/g |
| GV (900°C) | 10 - 14 Gew.-% |

Beispiel 2:

Der Adsorber aus Beispiel 1 wird 2 h lang bei 575°C nachcalciniert.

Vergleichsbeispiel 1

Es wird ein kommerziell erhältlicher Adsorber, basierend auf einer CuO/ZnO/Al$_2$O$_3$-Formulierung, wie er in gängigen Entschwefelungslösungen für Erdgas verwendet wird, eingesetzt. Die Gesamtmasse an Metalloxid beträgt hier über 75 Gew.-%, bezogen auf die Gesamtmasse des Adsorbers.

Alle Adsorbermaterialien wurden als identische Splitfraktionen von 3 x 3 mm-Tabletten eingesetzt. Als Reaktor diente ein beheizbares Edelstahlrohr, das von oben nach unten durchströmt wurde. Pro Versuch wurden 40 bzw. 50 ml Katalysator eingesetzt. Ein kommerziell verfügbares Erdgas (der Firma Linde) wurde verwendet.

Zur Analyse des Gases nach dem Reaktor wurde ein kommerzieller Gaschromatograph eingesetzt, welcher über eine Zwei-Säulen-Schaltung und zwei Detektoren verfügte. Der erste Detektor, ein Flamm-Ionisations-Detektor (FID) diente zum Nachweis der einzelnen Kohlenwasserstoffe im Erdgas, insbesondere von Benzol. Der zweite Detektor, ein Flamm-Photometrischer Detektor (FPD) ist sensitiv für Schwefelverbindungen und erlaubte den Nachweis derartiger Verbindungen bis zu einer praktischen Nachweisgrenze von 0,04 ppm.

Die Bestimmung der Kapazität des Adsorbers für die einzelnen Komponenten ergibt sich aus der Gesamtgasmenge (bis Durchbruch der ersten Schwefelverbindung) und der Konzentration der jeweiligen Komponente im Eingangsgas. Eine Vorbehandlung des Katalysators (z. B. Reduktion) ist nicht notwendig.

Generell wurde in allen Tests bis zur angegebenen Erschöpfung der Aufnahmekapazität eine Abreinigung der einzelnen schwefelhaltigen Komponenten unter die Nachweisgrenze erzielt!

Einzelkomponententestung:

Dimethylsulfid:

Mit Hilfe einer Prüfgasflasche wurde Dimethylsulfid (DMS, in Erdgas) in einen Volumenstrom von Erdgas dosiert, und somit eine mittleren Konzentration von 20 Vol.-ppm in insgesamt 170 Normlitern je Stunde über den Katalysator (68 ml, entspricht einer GHSV von 2500 h$^{-1}$) geleitet.

Bei Durchbruch von DMS hatte der erfindungsgemäße Adsorber (Beispiel 1) eine Kapazität von 6,6 g DMS/ L Katalysator erreicht. Der Referenzadsorber (Referenz 1) adsorbiert unter gleichen Bedingungen lediglich 0,4 g DMS/ L Katalysator.

Tetrahydrothiophen:

Tetrahydrothiophen (THT) wurde als Modellsubstanz für "organische" Schwefelverbindungen gewählt, da allgemein bekannt ist, dass sich zyklische Schwefelverbindungen im Gegensatz zu endständigen Schwefelverbindungen nur sehr schwer mittels Adsorption entfernen lassen. Weiterhin ist THT das in Deutschland am weitesten verbreitete Odorierungsmittel.

Das Gas wurde in einem Sättiger mit im Mittel 3 Vol.-ppm THT und 60 Vol.-ppm Benzol angereichert und mit einem Volumenstrom von 250 Normlitern je Stunde über den Katalysator (40 ml, entspricht einer GHSV von 6250 h$^{-1}$) geleitet. Die Messungen erfolgten bei Standarddruck (1013 mbar) und Raumtemperatur.

Bei Durchbruch von THT hatte der erfindungsgemäße Adsorber (Beispiel 1) eine Kapazität von 8,8 g THT/ L Katalysator erreicht. Der Referenzadsorber (Referenz 1) adsorbiert unter gleichen Bedingungen lediglich 4,0 g THT/ L Katalysator.

Das Material gemäß Beispiel 2 zeigt in einer identischen Messung eine THT-Kapazität von 9,7 g/ L Katalysator und weist nach Durchbruch von THT einen Benzolgehalt kleiner 0,1 Gew.-% auf.

Ethylmercaptan:

Ein weiteres Odorierungsmittel ist Ethylmercaptan (EtSH), welches als Odorierungsmittel in Erdgas, aber v. a. in LPG verwendet wird. Allgemein ist bekannt, dass es bei Verwendung von kupferhaltigen Katalysatoren zu einer oxidativen Dimerisierung von Mercaptanen zu Disulfiden (hier: Diethyldisulfid, DEDS) kommen kann. Daher wird die Gesamtkapazität des Adsorbers von der am ersten durchbrechenden Schwefelkomponente bestimmt (hier: EtSH oder DEDS).

Das Gas wurde in einem Sättiger mit im Mittel 15 Vol.-ppm EtSH angereichert und mit einem Volumenstrom von 200 Normlitern je Stunde Erdgas über den Katalysator (80 ml, entspricht einer GHSV von 2500 h-1) geleitet. Die Messungen erfolgten bei Standarddruck (1013 mbar) und Raumtemperatur.

Bei Durchbruch von DEDS hatte der erfindungsgemäß eingesetzte Adsorber (Beispiel 1) eine Kapazität von über 45 g EtSH/L Katalysator erreicht, ohne dass der Durchbruch einer schwefelhaltigen Komponente beobachtet wurde. Der Referenzadsorber (Referenz 1) adsorbiert unter gleichen Bedingungen lediglich 24,0 g EtSH/L Katalysator bei Durchbruch von DEDS.

COS und $H_2S$ bei Anwesenheit von 2 Vol-% $CO_2$ in Erdgas;

Die Entfernung von COS und $H_2S$ stellt, insbesondere bei Anwesenheit von $CO_2$ im Gas, eine Herausforderung an die Adsorbentien dar. In diesem Versuch wurden 50 Vol.-ppm COS und 150 Vol.-ppm $H_2S$ in einem Strom aus 167 Normlitern pro Stunde Erdgas und 3,4 Normliter pro Stunde $CO_2$ über den Katalysator (70 ml, entspricht einer GHSV von 2500 h-1) geleitet. Die Messungen erfolgten bei Standarddruck (1013 mbar) und Raumtemperatur.

Sowohl im Falle des erfindungsgemäßen Adsorbers (Beispiel 1), als auch im Falle des Referenzadsorbers (Referenz 1) erfolgte zuerst der Durchbruch an COS. Die Kapazität ist daher für den Durchbruchszeitpunkt von COS angegeben. Zu diesem Zeitpunkt hat der erfindungsgemäße Adsorber (Beispiel 1) eine Kapazität von über 60 g $H_2S$/ L Katalysator und 16 g COS/ L Katalysator erreicht. Der Referenzadsorber (Referenz 1) adsorbiert unter gleichen Bedingungen 58 g $H_2S$/ L Katalysator und lediglich 3 g COS/ L Katalysator.

Gegenüber dem Referenzmaterial werden für alle gängigen Schwefelkomponenten im Erdgas die Kapazitäten deutlich übertroffen. Vor allem das in Deutschenland als natürlicher Gasbegleitstoff vorrangig auftretende COS wird von dem erfindungsgemäß eingesetzten Adsorber sehr effektiv entfernt.

Durch die hohe Kapazität an THT und die niedrige Dimerisierungsaktivität des Adsorptionsmittels für Mercaptane ist der Adsorber für eine einstufige Entschwefelung von Erdgas, LPG und andere (gasförmige) Kohlenwasserstoffe geeignet. Daraus resultieren deutliche anwendungstechnische Vorteile gegenüber der 2-stufigen Adsorption mit strukturierten Schüttungen des Standes der Technik.

## Patentansprüche

1. Verfahren zur Entfernung von Schwefel enthaltenden Verbindungen aus einem koblenwasserstoffbaltigen Gasgemisch, wobei man das kohlenwasserstoffhaltige Gasgemisch mit einem Adsorbermaterial, enthaltend Kupferoxid auf Magnesiumsilikat als Trägermaterial, in Kontakt bringt, **dadurch gekennzeichnet, dass** die Schwefel enthaltenden Verbindungen ausgewählt sind aus der Gruppe bestehend aus Mercaptanen (R-S-H), organischen Sulfiden (R-S-R), Disulfiden (R-S-S-R) und zyklischen Schwefelverbindungen, und das kohlenwasserstoffhaltige Gasgemisch Erdgas oder Liquid Petroleum Gas ist.

2. Verfahren nach Anspruch 1, **dadurch gekennzeichnet, dass** das Adsorbermaterial die Schwefelkomponenten bis einschließlich der Nachweisgrenze von 0,04 ppm entfernt.

3. Verfahren nach Anspruch 1 oder 2, **dadurch gekennzeichnet, dass** das Adsorbermaterial 30 bis 70 Gew.-% CuO enthält.

4. Verfahren nach einem der Ansprüche 1 bis 3, **dadurch gekennzeichnet, dass** das Adsorbermaterial bis zu 2 Gew.-% ein oder mehrere weitere Metalloxide von Metallen der Gruppen 2 und 4 bis 12 des Periodensystems enthält, wobei der Gesamtmetalloxidgehalt 40 bis 62 Gew.-% beträgt.

5. Verfahren nach einem der Ansprüche 1 bis 4, **dadurch gekennzeichnet, dass** das kohlenwasserstoffhaltige Gasgemisch 1 bis 500 ppm an Schwefel enthaltenden Verbindungen enthält.

6. Verfahren nach einem der Ansprüche 1 bis 5, **dadurch gekennzeichnet, dass** das kohlenwasserstoffhaltige Gasgemisch 0,5 bis 50 ppm $H_2S$ enthält.

7. Verfahren nach einem der Ansprüche 1 bis 6, **dadurch gekennzeichnet, dass** das kohlenwasserstoffhaltige Gasgemisch 1 bis 100 ppm COS enthält.

8. Verfahren nach einem der Ansprüche 1 bis 7, **dadurch gekennzeichnet, dass** das kohlenwasserstoffhaltige Gasgemisch 0,5 bis 20 ppm Tetrahydrothiophen enthält.

9. Verfahren nach einem der Ansprüche 1 bis 8, **dadurch gekennzeichnet, dass** das kohlenwasserstoffhaltige Gasgemisch 1 bis 100 ppm Dimethylsulfid enthält.

10. Verfahren nach einem der Ansprüche 1 bis 9, **dadurch gekennzeichnet, dass** das kohlenwasserstoffhaltige Gasgemisch 1 bis 100 ppm Ethylmercaptan enthält.

**11.** Verfahren nach Anspruch 1, **dadurch gekennzeichnet, dass** das Adsorbermaterial die Schwefel enthaltenden Verbindungen zum Teil chemisorptiv und zum Teil physisorptiv binder wobei das Aasoroermaterial in einem auswechselbaren Behälter (Kartusche) vorliegt.

**12.** Verfahren nach Anspruch 11, **dadurch gekennzeichnet, dass** der auswechselbare Behälter mit gasdichten Schnellkupplungen versehen ist, und so leicht ausgetauscht werden kann.

**13.** Verfahren nach Anspruch 11 oder 12, **dadurch gekennzeichnet, dass** das Adsorbermaterial in dem Behälter regeneriert wird.

**14.** Verfahren nach Anspruch 13, **dadurch gekennzeichnet, dass** das Adsorbermaterial regeneriert wird, indem es mit einem stickstoffhaltigen Gasstrom bei Temperaturen von 150 bis 250°C in Kontakt gebracht wird.

**15.** Verfahren nach Anspruch 14, **dadurch gekennzeichnet, dass** der stickstoffhaltige Gasstrom und/oder der Behälter geheizt wird.

**16.** Verfahren nach einem der Ansprüche 13 bis 15, **dadurch gekennzeichnet, dass** das Adsorbermaterial ein- oder mehrfach regeneriert wird, bis die Aufnahmekapazität bezüglich der chemisorptiv gebundenen schwefelhaltigen Komponenten im Wesentlichen erschöpft ist.

## Claims

**1.** A process for removing sulfur compounds from a hydrocarbonaceous gas mixture, wherein the hydrocarbonaceous gas mixture is contacted with an adsorber material comprising copper oxide on magnesium silicate as support material, wherein the sulfur compounds are selected from the group consisting of mercaptans (R-S-H), organic sulfides (R-S-R), disulfides (R-S-S-R) and cyclic sulfur compounds, and the hydrocarbonaceous gas mixture is natural gas or liquid petroleum gas.

**2.** The process according to claim 1, wherein the adsorber material removes the sulfur components down to and including the detection limit of 0.04 ppm.

**3.** The process according to claim 1 or 2, wherein the adsorber material comprises 30 to 70% by weight of CuO.

**4.** The process according to any of claims 1 to 3, wherein the adsorber material comprises up to 2% by weight of one or more other metal oxides of metals of groups 2 and 4 to 12 of the Periodic Table, wherein the total metal oxide content is 40 to 62% by weight.

**5.** The process according to any of claims 1 to 4, wherein the hydrocarbonaceous gas mixture comprises 1 to 500 ppm of sulfur compounds.

**6.** The process according to any of claims 1 to 5, wherein the hydrocarbonaceous gas mixture comprises 0.5 to 50 ppm of $H_2S$.

**7.** The process according to any of claims 1 to 6, wherein the hydrocarbonaceous gas mixture comprises 1 to 100 ppm of COS.

**8.** The process according to any of claims 1 to 7, wherein the hydrocarbonaceous gas mixture comprises 0.5 to 20 ppm of tetrahydrothiophene.

**9.** The process according to any of claims 1 to 8, wherein the hydrocarbonaceous gas mixture comprises 1 to 100 ppm of dimethyl sulfide.

**10.** The process according to any of claims 1 to 9, wherein the hydrocarbonaceous gas mixture comprises 1 to 100 ppm of ethylmercaptan.

**11.** The process according to claim 1, wherein the adsorber material binds the sulfur compounds in part by chemisorption and in part by physisorption, wherein the adsorber material is present in an exchangeable container (cartridge).

12. The process according to claim 11, wherein the exchangeable container is provided with gas-tight quick-action couplings and can thus be easily exchanged.

13. The process according to claim 11 or 12, wherein the adsorber material is regenerated in the container.

14. The process according to claim 13, wherein the adsorber material is regenerated by contacting it with a nitrogenous gas stream at temperatures of 150 to 250°C.

15. The process according to claim 14, wherein the nitrogenous gas stream and/or the container is heated.

16. The process according to any of claims 13 to 15, wherein the adsorber material is regenerated once or many times until the uptake capacity with respect to the sulfur-comprising components bound by chemisorption is essentially spent.

**Revendications**

1. Procédé d'élimination de composés contenant du soufre d'un mélange gazeux contenant des hydrocarbures, le mélange gazeux contenant des hydrocarbures étant mis en contact avec un matériau adsorbant contenant de l'oxyde de cuivre sur du silicate de magnésium en tant que matériau support, **caractérisé en ce que** les composés contenant du soufre sont choisis dans le groupe constitué par les mercaptans (R-S-H), les sulfures organiques (R-S-R), les disulfures (R-S-S-R) et les composés de soufre cycliques, et le mélange gazeux contenant des hydrocarbures est le gaz naturel ou le gaz de pétrole liquéfié.

2. Procédé selon la revendication 1, **caractérisé en ce que** le matériau adsorbant élimine les composants soufrés jusqu'à la limite de détection de 0,04 ppm incluse.

3. Procédé selon la revendication 1 ou 2, **caractérisé en ce que** le matériau adsorbant contient 30 à 70 % en poids de CuO.

4. Procédé selon l'une quelconque des revendications 1 à 3, **caractérisé en ce que** le matériau adsorbant contient jusqu'à 2 % en poids d'un ou de plusieurs autres oxydes métalliques de métaux des groupes 2 et 4 à 12 du tableau périodique, la teneur totale en oxydes métalliques étant de 40 à 62 % en poids.

5. Procédé selon l'une quelconque des revendications 1 à 4, **caractérisé en ce que** le mélange gazeux contenant des hydrocarbures contient 1 à 500 ppm de composés contenant du soufre.

6. Procédé selon l'une quelconque des revendications 1 à 5, **caractérisé en ce que** le mélange gazeux contenant des hydrocarbures contient 0,5 à 50 ppm d'$H_2S$.

7. Procédé selon l'une quelconque des revendications 1 à 6, **caractérisé en ce que** le mélange gazeux contenant des hydrocarbures contient 1 à 100 ppm de COS.

8. Procédé selon l'une quelconque des revendications 1 à 7, **caractérisé en ce que** le mélange gazeux contenant des hydrocarbures contient 0,5 à 20 ppm de tétrahydrothiophène.

9. Procédé selon l'une quelconque des revendications 1 à 8, **caractérisé en ce que** le mélange gazeux contenant des hydrocarbures contient 1 à 100 ppm de sulfure de diméthyle.

10. Procédé selon l'une quelconque des revendications 1 à 9, **caractérisé en ce que** le mélange gazeux contenant des hydrocarbures contient 1 à 100 ppm d'éthylmercaptan.

11. Procédé selon la revendication 1, **caractérisé en ce que** le matériau adsorbant se lie aux composés contenant du soufre en partie par chimisorption et en partie par physisorption, le matériau adsorbant se trouvant dans un contenant remplaçable (cartouche).

12. Procédé selon la revendication 11, **caractérisé en ce que** le contenant remplaçable est muni de raccords rapides étanches aux gaz, et peut ainsi être remplacé facilement.

**13.** Procédé selon la revendication 11 ou 12, **caractérisé en ce que** le matériau adsorbant est régénéré dans le contenant.

**14.** Procédé selon la revendication 13, **caractérisé en ce que** le matériau adsorbant est régénéré par mise en contact avec un courant gazeux contenant de l'azote à des températures de 150 à 250 °C.

**15.** Procédé selon la revendication 14, **caractérisé en ce que** le courant gazeux contenant de l'azote et/ou le contenant sont chauffés.

**16.** Procédé selon 1"une quelconque des revendications 13 à 15, **caractérisé en ce que** le matériau adsorbant est régénéré une ou plusieurs fois, jusqu'à ce que la capacité d'absorption au regard des composants contenant du soufre reliés par chimisorption soit essentiellement épuisée.

# FIG.1A

# FIG.1B

# EP 2 337 621 B1

## IN DER BESCHREIBUNG AUFGEFÜHRTE DOKUMENTE

### In der Beschreibung aufgeführte Patentdokumente

- US 20020159939 A
- US 5763350 A
- DE 3525871 A
- US 6024933 A
- WO 2007021084 A
- EP 1121977 A
- WO 2004056949 A
- EP 07114114 A